# FASCICULE DE BREVET EUROPEEN

(11) **EP 3 275 728 B1**
(45) Date de publication et mention de la délivrance du brevet: **12.02.2020**
(21) Numéro de dépôt: 17182795.9
(22) Date de dépôt: 24.07.2017
(51) Int. Cl.: B60N 3/02, B60N 2/24, B61D 37/00, B61D 33/00, B60N 2/005, B60N 2/90

(54) **SIÈGE POUR PASSAGER DE VÉHICULE DE TRANSPORT PUBLIC, À ÉLÉMENT DE MAINTIEN ESCAMOTABLE**
SITZ MIT VERSENKBAREM HALTEELEMENT FÜR FAHRGAST IN EINEM ÖFFENTLICHEN TRANSPORTFAHRZEUG
A SEAT FOR A PASSENGER OF A PUBLIC TRANSPORT VEHICLE, HAVING A RETRACTABLE MAINTAINING ELEMENT

(30) Priorité: 26.07.2016 FR 1657165
(43) Date de publication de la demande: 31.01.2018
(73) Titulaire: ALSTOM Transport Technologies, 93400 Saint-Ouen (FR)
(72) Inventeur: MARTIN, David, 17220 Sainte Soulle (FR)
(74) Mandataire: Lavoix

(56) Documents cités:
- EP-A1- 2 578 447
- EP-A1- 2 862 745
- JP-A- 2006 035 969
- JP-A- 2014 168 995

## Description

La présente invention concerne un siège pour passager de véhicule de transport public, notamment de véhicule ferroviaire. Un exemple de siège de l'art antérieur est divulgué par le document EP2862745 A1.

Plus particulièrement, l'invention concerne un véhicule ferroviaire urbain ou régional, dans lequel les passagers sont amenés à se déplacer alors que le véhicule est en mouvement.

Un tel véhicule ferroviaire comporte une salle passagers, s'étendant dans une direction longitudinale et délimitée par des parois latérales dans une direction transversale perpendiculaire à la direction longitudinale.

Dans un tel véhicule urbain, une telle salle passagers comporte au moins un couloir de passage bordé latéralement par des rangées d'au moins deux sièges alignés, dont les dossiers sont tournés vers les parois latérales, les sièges faisant ainsi face au couloir de passage. Ces dossiers sont donc peu accessibles depuis le couloir afin de se tenir, ou pas accessibles lorsqu'un passager est présent sur le siège correspondant.

Habituellement, des barres verticales de maintien sont agencées de part et d'autre de la rangée de sièges dans la direction longitudinale, et une barre horizontale de maintien, fixée au plafond, est agencée au-dessus de la rangée de sièges.

Ainsi, un passager se déplaçant dans le couloir de passage peut se tenir à ces barres de maintien verticales et horizontales, pour se déplacer en sécurité malgré les mouvements du véhicule.

On notera que, pour des raisons de sécurité, il est nécessaire de pouvoir tenir au moins une barre de maintien à tout moment. Ainsi, il doit être possible de tenir deux barres de maintien simultanément, pour le passage de l'une de ces barres de maintien à l'autre, notamment pour se déplacer à l'intérieur du véhicule.

Toutefois, pour certaines personnes de petite taille, notamment de taille inférieure à 1m50, il n'est pas possible de tenir les deux barres simultanément. Cela concerne notamment un 5^{ème} centile femme, et les enfants. Pour une telle personne la barre de maintien horizontale fixée en plafond est trop haute, et les barres de maintien verticales trop éloignées les unes des autres.

Il en résulte qu'une telle personne de petite taille doit nécessairement lâcher une barre verticale pour aller saisir l'autre barre verticale, lorsqu'elle se déplace dans le couloir.

Afin de remédier à cet inconvénient, on agence habituellement des poignées de préhension suspendues, le long du couloir de passage. Ces poignées doivent être suffisamment basses pour être accessibles à une personne de petite taille. Cependant, de telles poignées peuvent être gênantes pour des personnes de grande taille, voire des personnes de taille moyenne, en leur arrivant par exemple au niveau du visage.

En outre, il n'est pas possible d'agencer de barre de maintien verticale dans un tel couloir de passage, car une telle barre entraverait la mobilité des personnes à mobilité réduite, notamment en fauteuil roulant.

L'invention a notamment pour but d'améliorer la sécurité pour le déplacement des personnes, notamment de petite taille, dans un véhicule de transport public, sans agencer de poignées suspendues gênantes et sans agencer de barres verticales supplémentaires.

A cet effet, l'invention a notamment pour objet un siège pour une voiture pour passagers de véhicule de transport public, notamment de véhicule ferroviaire, comportant au moins un élément latéral de calage de hanche, caractérisé en ce que l'élément latéral est mobile entre une première position de calage de hanche et une seconde position de préhension, et comporte une partie de préhension accessible, au moins dans la seconde position (B), à une personne debout pour permettre à cette personne de se tenir lors d'un déplacement dans la voiture.

Lorsqu'une personne nécessite un maintien lors d'un déplacement dans le véhicule en mouvement, elle peut faire passer l'élément latéral dans sa seconde position, pour le maintenir dans sa partie de préhension.

Lorsque les sièges bordant un couloir de passage sont équipés d'un tel élément latéral, la personne peut se maintenir en permanence sur toute la longueur du couloir.

Lorsque l'élément latéral n'est pas utilisé pour le maintien d'une personne, il est retourné dans sa première position pour remplir sa fonction classique de calage de hanche.

Un siège selon l'invention peut comporter en outre l'une ou plusieurs des caractéristiques techniques suivantes, prises seules ou selon toutes combinaisons techniquement envisageable.
- Le siège comporte un dossier et une assise s'étendant entre le dossier et un bord avant, l'élément latéral étant mobile en rotation autour d'une liaison pivot d'axe défini à proximité du bord avant et sensiblement parallèle à ce bord avant.
- L'élément latéral est formé par une barre repliée, par exemple pour former une boucle, et reliée à la liaison pivot.
- Le siège comporte des moyens de déplacement de l'élément latéral vers sa seconde position, comprenant par exemple un organe élastique de rappel et/ou des moyens d'entrainement motorisés.
- Le siège comporte des premiers moyens libérables de verrouillage de l'élément latéral dans sa première position.
- Le siège comporte des seconds moyens libérables de verrouillage de l'élément latéral dans sa seconde position.

L'invention concerne également une voiture de véhicule de transport public, notamment de véhicule ferroviaire, comportant au moins une salle passagers, caractérisé en ce qu'elle comporte, dans la salle passagers, au moins un siège tel que défini précédemment.

Une voiture selon l'invention peut comporter en outre l'une ou plusieurs des caractéristiques techniques suivantes, prises seules ou selon toutes combinaisons techniquement envisageable.
- La salle passager s'étendant dans une direction longitudinale et étant délimitée par des parois latérales dans une direction transversale perpendiculaire à la direction longitudinale, le siège comporte un dossier tourné vers l'une des parois latérales.
- La voiture comporte une rangée d'au moins deux sièges, les sièges de chaque ensemble de deux sièges adjacents de la rangée partageant un élément latéral mobile commun.

L'invention sera mieux comprise à la lecture de la description qui va suivre, donnée uniquement à titre d'exemple et faite en se référant aux figures annexées, parmi lesquelles :
- la figure 1 est une vue en coupe transversale d'une voiture de véhicule de transport public, comportant au moins un siège selon l'invention ;
- la figure 2 est une vue du dessus de la voiture de la figure 1.

On a représenté sur les figures une voiture 10 d'un véhicule de transport public. De préférence, le véhicule de transport public est un véhicule ferroviaire, notamment un véhicule ferroviaire urbain tel qu'un tramway ou un métro. En variante, le véhicule est un train régional. Conformément à une autre variante, le véhicule est un bus. Tout autre véhicule de transport public est envisageable.

En fonction du véhicule de transport public envisagé, celui-ci peut comporter plusieurs voitures 10, généralement similaires.

La voiture 10 comporte une salle de passagers 12 s'étendant dans une direction longitudinale X. La salle 12 est délimitée par des parois latérales 13 dans une direction transversale Y perpendiculaire à la direction longitudinale X.

La salle 12 comporte au moins un siège 14 destiné à permettre à un passager de s'asseoir. Le siège 14 comporte de manière classique une assise 16 et un dossier 18.

Dans la présente description, on considérera particulièrement un siège 14 dont le dossier 18 est tourné vers l'une des parois latérales 13, comme cela est représenté sur les figures. Dans l'exemple décrit, tous les sièges 14 sont ainsi orientés.

En variante, la salle 12 pourrait comporter d'autres sièges (non représentés) dont le dossier et l'assise sont alignés dans la direction longitudinale X.

Chaque siège 14 est fixé dans la salle 12 par des moyens de fixation classiques.

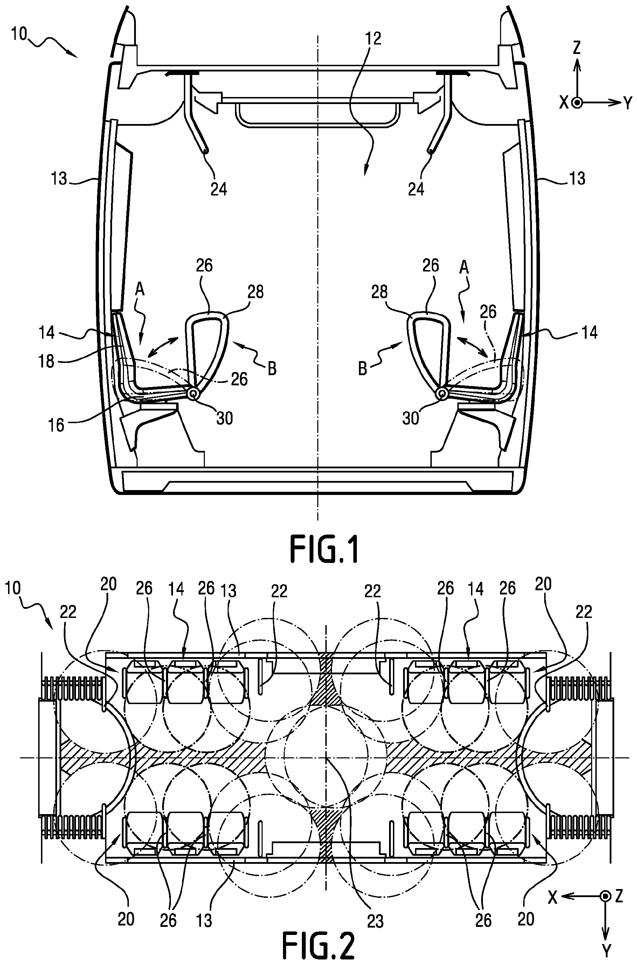

De préférence, la salle 12 comporte plusieurs rangées 20 de sièges 14 alignés dans la direction longitudinale X. Chaque rangée 20 comporte au moins deux sièges 14, par exemple trois sièges 14 comme cela est représenté sur la figure 2, ou en variante quatre sièges 14.

Deux rangées 20 de siège sont disposées l'une en regard de l'autre dans la direction transversale Y, délimitant ensemble un couloir de passage.

La salle 12 comporte une barre de maintien verticale 22 de part et d'autre de chaque rangée 20 dans la direction longitudinale X. Par ailleurs, la salle 12 comporte une barre de maintien horizontale 24 au-dessus de chaque rangée 20 dans une direction verticale Z perpendiculaire aux directions longitudinale X et transversale Y. La salle 12 comporte par ailleurs avantageusement une barre de maintien verticale centrale 23.

Ces barres de maintien verticales 22, 23 et horizontale 24 permettent à des personnes, se déplaçant le long du couloir de passage dans la voiture 10 en mouvement, de se tenir afin de ne pas risquer de tomber.

Toutefois, les barres de maintien horizontales 24 ne sont pas accessibles à des personnes de petite taille, notamment de taille inférieure à 1m50.

Afin de permettre à ces personnes de petite taille de se tenir lors de leurs déplacements dans la voiture 12, chaque siège 14 comporte au moins un élément latéral de calage de hanche 26, mobile entre une première position A de calage de hanche et une seconde position B de préhension. Chaque élément latéral 26 comporte une partie de préhension 28 accessible dans la seconde position.

Les première A et la seconde B positions sont représentées sur la figure 1. Dans la première position A, l'élément latéral 26 s'étend sensiblement horizontalement, afin de remplir une fonction classique de calage de hanche, et en variante également une fonction d'accoudoir. Dans la seconde position B, l'élément latéral 26 s'étend sensiblement verticalement, de sorte que la partie de préhension 28 est accessible à une personne debout près du siège 14, notamment une personne dite de petite taille.

Ainsi, lorsque l'élément latéral 26 est dans la seconde position B, il permet à une personne de petite taille de se déplacer dans le couloir de passage, en se tenant à une barre de maintien verticale 22, 23 ou à un élément latéral 26.

Avantageusement, chaque élément latéral 26 est mobile en rotation autour d'une liaison pivot 30 d'axe défini à proximité d'un bord avant de l'assise, et sensiblement parallèle à ce bord avant. Dans le cas des sièges 14, cet axe de pivotement est parallèle à la direction longitudinale X.

Dans l'exemple décrit, chaque élément latéral 26 est formé par une barre repliée pour former une boucle, plus particulièrement une boucle fermée. Par exemple, cette boucle est fermée au niveau de la liaison pivot 30.

En variante, la barre repliée forme une boucle ouverte. La boucle présente, par exemple, une extrémité liée au niveau de la liaison pivot et une extrémité libre.

En variante, l'élément latéral 26 ne forme pas une boucle fermée, mais est formée par une barre repliée, non fermée.

Le siège 14 comporte des moyens de déplacement de l'élément latéral vers sa seconde position B. Ces moyens de déplacement sont par exemple commandés par un organe de commande activable depuis chaque barre de maintien 22 bordant l'ensemble 20 comportant ce siège 14.

Par exemple, les moyens de déplacement comportent un organe élastique de rappel de l'élément latéral 26 vers sa seconde position B. Dans ce cas, ces moyens de déplacement comportent des premiers moyens de verrouillage de l'élément latéral 26 dans sa première position A, libérables par actionnement de l'organe de commande. L'actionnement de l'organe de commande libère donc l'élément latéral 26, qui est déplacé vers sa seconde position B par l'organe élastique.

Avantageusement, les moyens de déplacement comportent des seconds moyens de verrouillage de l'élément latéral 26 dans sa seconde position B, destiné à maintenir l'élément latéral 26 immobile dans sa seconde position B, pour former un élément de maintien fixe pour la personne le saisissant. Ce second élément de verrouillage peut être libéré par un organe de déverrouillage, par exemple agencé à proximité de l'élément latéral 26, et/ou de chaque barre de maintien 22 bordant l'ensemble 20 comportant ce siège 14.

En variante, les moyens de déplacement comportent des moyens d'entrainement motorisés pour entrainer l'élément latéral 26 entre sa première position A et sa seconde position B. Plusieurs options sont alors envisageables.

Dans une première configuration possible, les moyens d'entrainement motorisés sont configurés pour entrainer l'élément latéral 26 depuis sa première position A vers sa seconde position B. Ces moyens d'entrainement sont débrayables, et les moyens de déplacement comportent un organe élastique de rappel pour ramener l'élément latéral 26 vers sa première position A lorsque les moyens d'entrainement sont débrayés.

Dans une seconde configuration possible, les moyens d'entrainement motorisés sont configurés pour entrainer l'élément latéral 26 depuis sa seconde B vers sa première position A. Ces moyens d'entrainement sont débrayables, et les moyens de déplacement comportent un organe élastique de rappel, pour ramener l'élément latéral 26 vers sa seconde position B lorsque les moyens d'entrainement sont débrayés.

Dans une troisième configuration possible, les moyens d'entrainement motorisés sont inversables, pour entrainer l'élément latéral 26 vers l'une ou l'autre de ses positions en fonction de la commande.

Dans une quatrième configuration possible, les moyens de déplacement ne comportent que l'organe élastique de rappel vers la seconde position B, l'élément latéral 26 étant ramené manuellement vers la première position A.

Ces configurations décrites ci-dessus ne sont que des exemples, tout type de configuration des moyens de déplacement étant envisageables.

Avantageusement, dans chaque rangée 20, au moins un élément latéral 26 est commun à deux sièges adjacents 14. Plus particulièrement, les sièges 14 de chaque ensemble de deux sièges 14 adjacents de la rangée 20 partagent un élément latéral mobile 26 commun.

On notera que l'invention n'est pas limitée au mode de réalisation précédemment décrit, mais pourrait présenter diverses variantes complémentaires.

Par exemple, un siège aligné avec la direction longitudinale pourrait comporter un élément latéral 26 tel que décrit précédemment, notamment lorsque ce siège borde un couloir de passage.

Il apparait clairement que l'invention permet à une personne de petite taille de se déplacer en sécurité dans la voiture 10 en mouvement. On a représenté sur la figure 2, par des cercles autour des organes de maintien, toutes les zones dans lesquelles la personne peut se tenir à un organe de maintien. Il apparait que, grâce aux éléments latéraux 26, ces zones s'enchainent pour autoriser un déplacement en sécurité sur toute la longueur de la voiture 10.

## Revendications

1. Siège (14) pour une voiture (10) pour passagers de véhicule de transport public, notamment de véhicule ferroviaire, comportant au moins un élément latéral (26) de calage de hanche, **caractérisé en ce que** l'élément latéral (26) est mobile entre une première position (A) de calage de hanche et une seconde position (B) de préhension, et comporte une partie de préhension (28) accessible, au moins dans la seconde position (B), à une personne debout pour permettre à cette personne de se tenir lors d'un déplacement dans la voiture.

2. Siège (14) selon la revendication 1, comportant un dossier (18) et une assise (16) s'étendant entre le dossier (18) et un bord avant, l'élément latéral (26) étant mobile en rotation autour d'une liaison pivot (30) d'axe défini à proximité du bord avant et sensiblement parallèle à ce bord avant.

3. Siège (14) selon la revendication 2, dans lequel l'élément latéral (26) est formé par une barre repliée, par exemple pour former une boucle, et reliée à la liaison pivot (30).

4. Siège (14) selon l'une quelconque des revendications précédentes, comportant des moyens de déplacement de l'élément latéral (26) vers sa seconde position (B), comprenant par exemple un organe élastique de rappel et/ou des moyens d'entrainement motorisés.

5. Siège (14) selon l'une quelconque des revendications précédentes, comportant des premiers moyens libérables de verrouillage de l'élément latéral (26) dans sa première position (A).

6. Siège (14) pour passager selon l'une quelconque des revendications précédentes, comportant des seconds moyens libérables de verrouillage de l'élément latéral (26) dans sa seconde position (B).

7. Voiture (10) de véhicule de transport public, notamment de véhicule ferroviaire, comportant au moins une salle passagers (12), **caractérisé en ce qu'**elle comporte, dans la salle passagers (12), au moins un siège (14) selon l'une quelconque des revendications 1 à 6.

8. Voiture (10) selon la revendication 7, dans laquelle, la salle passager (12) s'étendant dans une direction longitudinale (X) et étant délimitée par des parois latérales (13) dans une direction transversale (Y) perpendiculaire à la direction longitudinale (X), le siège (14) comporte un dossier (18) tourné vers l'une des parois latérales (13).

9. Voiture (10) selon la revendication 8, comportant une rangée (20) d'au moins deux sièges (14) selon l'une quelconque des revendications 1 à 6, les sièges (14) de chaque ensemble de deux sièges (14) adjacents de la rangée (20) partageant un élément latéral mobile (26) commun.

## Patentansprüche

1. Sitz (14) für einen Wagen (10) für Passagiere eines öffentlichen Transportfahrzeugs, insbesondere eines Schienenfahrzeugs, der mindestens ein Seitenelement (26) zum Festhalten der Hüfte aufweist, **dadurch gekennzeichnet, dass** das Seitenelement (26) zwischen einer ersten Position (A) des Festhaltens der Hüfte und einer zweiten Position (B) als Griff beweglich ist und ein Griffteil (28) aufweist, das mindestens in der zweiten Position (B) für eine aufrecht stehende Person zugänglich ist, um dieser Person zu ermöglichen, sich bei einer Bewegung in dem Wagen festzuhalten.

2. Sitz (14) nach Anspruch 1, der eine Rückenlehne (18) und ein Sitzteil (16) aufweist, das sich zwischen der Rückenlehne (18) und einem Vorderrand erstreckt, wobei das Seitenelement (26) drehbeweglich um eine Schwenkverbindung (30) mit einer Achse ist, die in der Nähe des Vorderrandes und im Wesentlichen parallel zu diesem Vorderrand vorgegeben ist.

3. Sitz (14) nach Anspruch 2, bei dem das Seitenelement (26) aus einer gebogenen Stange gebildet ist, beispielsweise um eine Schleife zu bilden, und mit der Schwenkverbindung (30) verbunden ist.

4. Sitz (14) nach einem beliebigen der vorhergehenden Ansprüche, der Mittel zum Bewegen des Seitenelementes (26) in seine zweite Position (B) aufweist, die beispielsweise ein elastisches Rückstellelement und/oder motorisierte Antriebsmittel umfassen.

5. Sitz (14) nach einem beliebigen der vorhergehenden Ansprüche, der erste lösbare Mittel zum Verriegeln des Seitenelementes (26) in seiner ersten Position (A) aufweist.

6. Sitz (14) für einen Passagier nach einem beliebigen der vorhergehenden Ansprüche, der zweite lösbare Mittel zum Verriegeln des Seitenelementes (26) in seiner zweiten Position (B) aufweist.

7. Wagen (10) eines öffentlichen Transportfahrzeugs, insbesondere Schienenfahrzeugs, der mindestens einen Passagierraum (12) aufweist, **dadurch gekennzeichnet, dass** er in dem Passagierraum (12) mindestens einen Sitz (14) nach einem beliebigen der Ansprüche 1 bis 6 aufweist.

8. Wagen (10) nach Anspruch 7, bei dem der Passagierraum (12) sich in einer Längsrichtung (X) erstreckt und durch Seitenwände (13) in einer Querrichtung (Y) senkrecht zur Längsrichtung (X) begrenzt ist, wobei der Sitz (14) eine Rückenlehne (18) aufweist, die zu einer der Seitenwände (13) gerichtet ist.

9. Wagen (10) nach Anspruch 8, der eine Reihe (20) von mindestens zwei Sitzen (14) nach einem beliebigen der Ansprüche 1 bis 6 aufweist, wobei die Sitze (14) jeder Anordnung von benachbarten zwei Sitzen (14) der Reihe (20) sich ein gemeinsames bewegliches Seitenelement (26) teilen.

## Claims

1. A seat (14) for a car (10) for public transportation vehicle passengers, in particular railway vehicles, including at least one lateral hip wedge element (26), **characterized in that** the lateral element (26) is movable between a first hip wedging position (A) and a second gripping position (B), and includes a gripping part (28) accessible, at least in the second position (B), to a standing person to allow this person to hold on when moving in the car.

2. The seat (14) according to claim 1, including a seat back (18) and seat bottom (16) extending between the seat back (18) and a front edge, the lateral element (26) being rotatable around a pivot link (30) with an axis defined near the front edge and substantially parallel to said front edge.

3. The seat (14) according to claim 2, wherein the lateral element (26) is formed by a bent bar, for example to form a loop, and connected to the pivot link (30).

4. The seat (14) according to any one of the preceding claims, including means for moving the lateral element (26) toward its second position (B), for example comprising an elastic return member and/or motorized driving means.

5. The seat (14) according to any one of the preceding claims, including first releasable means for locking the lateral element (26) in its first position (A).

6. The seat (14) for a passenger according to any one of the preceding claims, including second releasable means for locking the lateral element (26) in its second position (B).

7. A public transport vehicle car (10), in particular for a railway vehicle, including at least one passenger room (12), **characterized in that** it includes, in the passenger room (12), at least one seat (14) according to any one of claims 1 to 6.

8. The car (10) according to claim 7, wherein, the passenger room (12) extending in a longitudinal direction (X) and being delimited by side walls (13) in a transverse direction (Y) perpendicular to the longitudinal direction (X), the seat (14) includes a seat back (18) turned toward one of the side walls (13).

9. The car (10) according to claim 8, including a row (20) of at least two seats (14) according to any one of claims 1 to 6, the seats (14) of each set of two adjacent seats (14) of the row (20) sharing a shared moving lateral element (26).
